# EUROPEAN PATENT APPLICATION

(11) **EP 4 814 498 A1**
(43) Date of publication of application: **30.09.2026**
(21) Application number: 26162476.1
(22) Date of filing: 05.03.2026
(51) Int. Cl.: G01P 21/02, G01M 17/007, G01P 3/04, G01P 3/24, G01P 3/64

(54) **SPEED CALIBRATION SYSTEM**

(30) Priority: 25.03.2025 JP 2025050121
(71) Applicant: Toyota Jidosha Kabushiki Kaisha, Toyota-shi, Aichi-ken 471-8571 (JP)
(72) Inventor: KOYAMA, Keisuke, Toyota-shi, Aichi-ken 471-8571 (JP); SAITO, Yasuhiro, Kariya-shi, Aichi-ken 448-8666 (JP)
(74) Representative: TBK

(57) **Abstract**

A calibration system includes an acquisition unit and a calibration unit. The acquisition unit acquires a displayed speed value related to a displayed speed and an actual speed value related to an actual speed of a moving object. The displayed speed indicates a moving speed of the moving object and is displayed on a display unit provided to the moving object. The calibration unit executes calibration processing of calibrating the displayed speed to reduce a difference between the displayed speed value and the actual speed value.

## Description

### BACKGROUND

### FIELD

The present disclosure relates to a calibration system.

### RELATED ART

Japanese Translation of PCT international Application Publication No. JP-T-2017-538619 discloses a technology of causing a vehicle to run autonomously or by remote control in a production step of the vehicle.

Conventionally, displayed vehicle speed inspection of inspecting a displayed speed of a vehicle is known. In the displayed speed inspection, whether a difference between a displayed speed and an actual speed falls within a prescribed range is only inspected. Therefore, even when a result of the displayed speed inspection is a pass, normally, there is a difference between the displayed speed and the actual speed. In order to improve convenience of a vehicle, there is a need for a technique to reduce the difference between the displayed speed and the actual speed. This is not a problem only to vehicles but is in common with any moving objects.

### SUMMARY

The present disclosure is achievable as the following aspects.
(1) According to an aspect of the present disclosure, a calibration system is provided. The calibration system includes an acquisition unit and a calibration unit. The acquisition unit acquires a displayed speed value related to a displayed speed and an actual speed value related to an actual speed of a moving object. The displayed speed indicates a moving speed of the moving object and is displayed on a display unit provided to the moving object. The calibration unit executes calibration processing of calibrating the displayed speed to reduce a difference between the displayed speed value and the actual speed value.
   According to this aspect, the displayed speed is calibrated to reduce the difference between the displayed speed value and the actual speed value. Therefore, a difference between the displayed speed and the actual speed can be more reduced, and the moving object can have improved convenience.
(2) In the above-described aspect, the calibration unit may execute the calibration processing when a speed difference between the displayed speed value and the actual speed value is equal to or less than a first reference value determined in advance and larger than a second reference value that is smaller than the first reference value, and may not execute the calibration processing when the speed difference is larger than the first reference value. According to this aspect, the displayed speed can be calibrated upon confirming that the difference between the displayed speed value and the actual speed value is equal to or less than the first reference value. Therefore, the calibrated displayed speed can have more improved reliability.
(3) In the above-described aspect, the acquisition unit may re-acquire the displayed speed value and the actual speed value after completion of the calibration processing. When a re-acquired difference is larger than the second reference value, the calibration unit may execute re-calibration processing of calibrating the displayed speed to reduce the re-acquired difference. The re-acquired difference may indicate the speed difference between the re-acquired displayed speed value and the re-acquired actual speed value. According to this aspect, the difference between the displayed speed and the actual speed can more surely be reduced to a desired extent.
(4) In the above-described aspect, the calibration system may further include a vehicle as the moving object, roller equipment, and a control unit. The roller equipment may include a roller that is rotatable while supporting a wheel of the vehicle, and a sensor that detects a peripheral speed of the roller. The control unit may execute roller processing of drivingly rotating the wheel supported by the roller by unmanned driving control of the vehicle to cause the roller to rotate in a driven manner. The actual speed value may be the peripheral speed in the roller processing. The displayed speed value may be the displayed speed corresponding in terms of time to the peripheral speed in the roller processing. According to this aspect, the roller equipment and the unmanned driving control can be utilized to efficiently execute the calibration processing without moving the vehicle on the roller.
(5) In the above-described aspect, the control unit may cause the vehicle to move onto the roller by the unmanned driving control before execution of the calibration processing, and cause the vehicle to move off the roller by the unmanned driving control after completion of the calibration processing. According to this aspect, the unmanned driving control can be utilized to automatically execute moving of the vehicle onto the roller, the calibration processing on the roller, and moving of the vehicle off the roller, and thereby the displayed speed can be more efficiently calibrated.
The present disclosure can be implemented in aspects other than the aspect as the calibration system described above. For example, the present disclosure can be implemented in aspects, such as a calibration method, a control device, a program to implement a calibration method, a non-transitory recording medium recording a program, and a program product. Note that the program product may be provided as, for example, a recording medium recording a program, or a program product distributable over a network.

### BRIEF DESCRIPTION OF THE DRAWINGS

Fig. 1 is a conceptual diagram illustrating a configuration of a system according to a first embodiment;
Fig. 2 is an explanatory diagram illustrating roller equipment;
Fig. 3 is a block diagram illustrating a configuration of the system according to the first embodiment;
Fig. 4 is a flowchart illustrating a procedure of running control of a vehicle according to the first embodiment;
Fig. 5 is a flowchart illustrating a procedure of calibration control processing;
Fig. 6 is an explanatory diagram illustrating a schematic configuration of a system according to a second embodiment; and
Fig. 7 is a flowchart illustrating a procedure of running control of a vehicle according to a third embodiment.

### DETAILED DESCRIPTION

### A. First Embodiment

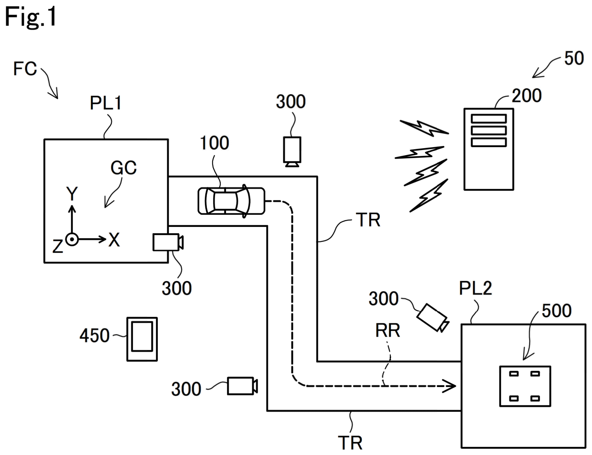

Fig. 1 is a conceptual diagram illustrating a configuration of a system 50 according to a first embodiment. The system 50 includes one or more vehicles 100 as a moving object, a server 200, one or more external sensors 300, and roller equipment 500. The system 50 in this embodiment functions as a calibration system that executes calibration of a displayed speed described later.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

Note that control, such as remote control and autonomous control, for implementing unmanned driving is also referred to as unmanned driving control. Moreover, control for implementing manned driving is also referred to as manned driving control.

In this embodiment, the system 50 is used in a factory FC where the vehicle 100 is produced. A reference coordinate system in the factory FC is a global coordinate system GC, and any position in the factory FC can be represented by X, Y, and Z coordinates in the global coordinate system GC. The factory FC includes a first place PL1 and a second place PL2. A track TR on which the vehicle 100 can run connects the first place PL1 and the second place PL2. The vehicle 100 moves from the first place PL1 to the second place PL2 through the track TR by unmanned driving. In this embodiment, the roller equipment 500 is disposed at the second place PL2.

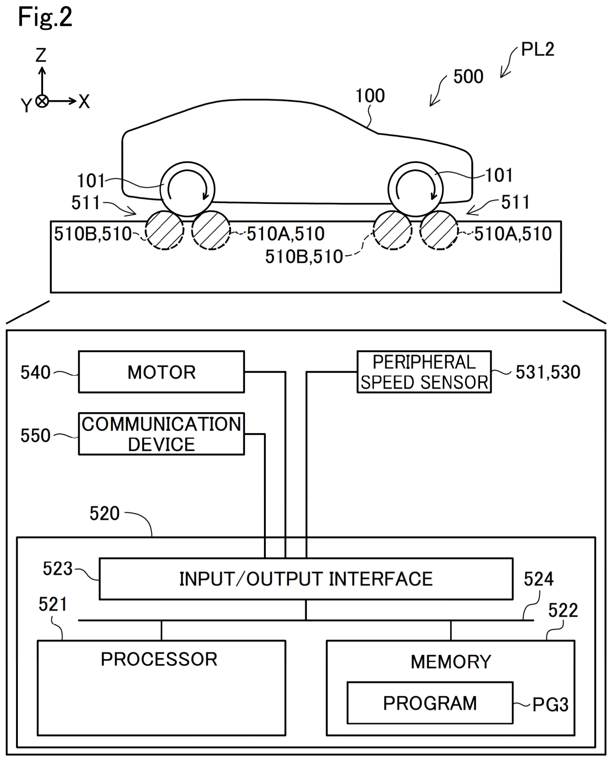

Fig. 2 is an explanatory diagram illustrating the roller equipment 500 according to this embodiment. The roller equipment 500 is used to inspect an actual vehicle speed of the vehicle 100. As illustrated in Fig. 2, the roller equipment 500 as a roller device includes a roller 510, an equipment control device 520, an equipment sensor 530, and a plurality of motors 540.

The roller 510 is installed, for example, to a road surface in the factory FC or to a stand on which the vehicle 100 is placed, in such a manner that the vehicle 100 can run onto the roller 510. The roller 510 is rotatable while supporting a wheel 101 of the vehicle 100. In this embodiment, the roller equipment 500 includes a roller unit 511 per wheel 101. The roller unit 511 includes two rollers 510: a front roller 510A and a rear roller 510B. The front roller 510A is disposed on a +X side of the rear roller 510B. That is, the roller equipment 500 has a configuration in which two rollers 510 support each wheel 101 and includes eight rollers 510 in total. In Fig. 2, the rollers 510 are hatched. Note that, in other embodiments, one roller unit 511 that can support left and right wheels 101 together may be provided to each of a pair of front wheels and a pair of rear wheels. Further, for example, the roller unit 511 may have a configuration in which one roller 510 supports one front wheel and two rollers 510 support one rear wheel, or a configuration in which two rollers 510 support one front wheel and two rollers 510 support one rear wheel.

The plurality of motors 540 include a motor 540 that rotates the front roller 510A and a motor 540 that rotates the rear roller 510B.

The equipment sensor 530 includes a peripheral speed sensor 531. The peripheral speed sensor 531 is a sensor to detect a peripheral speed of the roller 510. For example, the peripheral speed sensor 531 is a rotation speed sensor that detects rotation speed of the roller 510.

The equipment control device 520 controls each unit of the roller equipment 500. The equipment control device 520 includes a computer including a processor 521, a memory 522, an input/output interface 523, and an internal bus 524. The motor 540, a communication device 550, and the equipment sensor 530 are coupled to the input/output interface 523. The processor 521, the memory 522, and the input/output interface 523 are coupled to one another via the internal bus 524 in a bidirectionally communicable manner. The equipment control device 520 includes the communication device 550 and can communicate with another device, such as the server 200, by wired or wireless communication. The processor 521 executes a program PG3 stored in the memory 522, thus implementing various functions.

The roller equipment 500 has a driven inspection function. The driven inspection function is a function of drivingly rotating the wheel 101 on the roller 510 to rotate the roller 510 in a driven manner and thus inspecting the vehicle 100. That is, in the driven inspection function, the roller 510 rotates in such a manner as to follow driving rotation of the vehicle 100. In the case in which the roller 510 rotates by the driven inspection function, a detection result of the peripheral speed sensor 531 can be used to detect an actual measurement value of a peripheral speed of the wheel 101, that is, an actual vehicle speed of the vehicle 100. The roller device having the driven inspection function is also referred to as a "drum tester".

As illustrated in Fig. 1, in the factory FC, a plurality of external sensors 300 are disposed along the track TR. A position of each external sensor 300 in the factory FC is adjusted in advance. The external sensor 300 is a sensor positioned outside of the vehicle 100. In this embodiment, the external sensor 300 includes a camera. The camera as the external sensor 300 images the vehicle 100 and outputs a captured image as a detection result. The external sensor 300 includes a communication device (not illustrated) and can communicate with another device, such as the server 200, by wired or wireless communication.

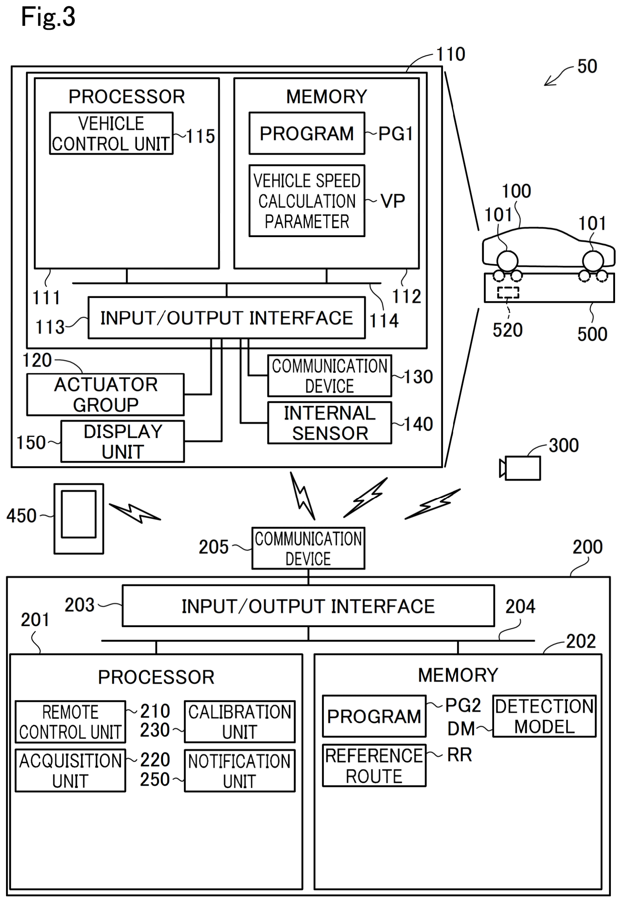

Fig. 3 is a block diagram illustrating a configuration of the system 50. The vehicle 100 includes a vehicle control device 110 that controls each unit of the vehicle 100, an actuator group 120 including one or more actuators that perform driving under control of the vehicle control device 110, a communication device 130 to communicate with an external device such as the server 200 by wireless communication, one or more internal sensors 140, and a display unit 150. The actuator group 120 includes an actuator of a driving device for accelerating the vehicle 100, an actuator of a steering device for changing a traveling direction of the vehicle 100, and an actuator of a braking device for decelerating the vehicle 100.

The internal sensor 140 is a sensor installed to the vehicle 100. The internal sensor 140 includes a vehicle speed sensor to detect a vehicle speed of the vehicle 100. The internal sensor 140 may include, other than the vehicle speed sensor, for example, various types of sensors, such as a camera, a LiDAR, a millimeter-wave radar, an ultrasonic sensor, a GNSS sensor, a wheel speed sensor, an acceleration sensor, a torque sensor, a gyro sensor, a shift position sensor, and various types of encoders that detect operation of each unit of the vehicle 100. Note that the wheel speed sensor may be used as the vehicle speed sensor.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120, the communication device 130, the internal sensor 140, and the display unit 150 are coupled to the input/output interface 113. The memory 112 stores various types of information, such as a program PG1 and a vehicle speed calculation parameter VP. The processor 111 executes the program PG1 stored in the memory 112, thus implementing various functions including a function as a vehicle control unit 115.

The vehicle control unit 115 controls the actuator group 120 to cause the vehicle 100 to run. The vehicle control unit 115 can use a running control signal received from the server 200 to control the actuator group 120, thereby causing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The vehicle control unit 115 calculates a displayed speed of the vehicle 100 and displays the calculated displayed speed on the display unit 150. The displayed speed indicates a moving speed of the vehicle 100 and is displayed on the display unit 150 provided to the vehicle 100. In this embodiment, the vehicle control unit 115 uses the detection result by the vehicle speed sensor and the vehicle speed calculation parameter VP to calculate the displayed speed. For example, the vehicle speed calculation parameter VP is a correction factor for correcting the detection result by the vehicle speed sensor in accordance with a state of the vehicle 100.

The display unit 150 displays the displayed speed. For example, the display unit 150 may be a digital indicator or a display device that displays the displayed speed in a digital form, or may be an analog indicator that displays the displayed speed in an analog form. The display unit 150 may be capable of displaying information other than the displayed speed in addition to the displayed speed. The display unit 150 is preferably disposed at a position visible by an occupant seated in a driver seat.

The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices located outside of the server 200 is coupled to the input/output interface 203. The communication device 205 can communicate with the vehicle 100 and a terminal device 450 described later by wireless communication, and can communicate with each external sensor 300 and the roller equipment 500 by wired or wireless communication. The memory 202 stores various types of information including a program PG2, a detection model DM, and a reference route RR. The processor 201 executes the program PG2 stored in the memory 202, thus implementing various functions including functions as a remote control unit 210, an acquisition unit 220, a calibration unit 230, and a notification unit 250. The remote control unit 210 in this embodiment corresponds to a "control unit" of the present disclosure.

The remote control unit 210 generates the running control signal to control the actuator group 120 of the vehicle 100 and transmits the running control signal to the vehicle 100, thus causing the vehicle 100 to run by the remote control.

In this embodiment, the remote control unit 210 executes roller processing. The roller processing is processing of drivingly rotating the wheel 101 supported by the roller 510 by the unmanned driving control to cause the roller 510 to rotate in a driven manner. In the roller processing, the driven inspection function is utilized to inspect the vehicle 100. In the roller processing, for example, the remote control unit 210 may transmit to the roller equipment 500 a signal to start acquisition of the detection result by the equipment sensor 530 and/or a signal to end acquisition of the detection result by the equipment sensor 530 in accordance with operation of the vehicle 100 at the roller equipment 500.

More specifically, in the roller processing, the remote control unit 210 generates the running control signal and transmits the generated running control signal to the vehicle 100 on the roller 510 while the vehicle 100 is supported by the roller 510. As a result, the wheel 101 supported by the roller 510 drivingly rotates, and the roller 510 rotates in such a manner as to follow the driving rotation of the wheel 101.

The acquisition unit 220 acquires a displayed speed value and an actual speed value. The displayed speed value is a value related to the displayed speed of the vehicle 100. The actual speed value is a value related to an actual speed of the vehicle 100.

In this embodiment, the acquisition unit 220 uses the detection result of the internal sensor 140 to acquire the displayed speed value. More specifically, the acquisition unit 220 acquires the displayed speed calculated by the vehicle control unit 115 as the displayed speed value. Further, the acquisition unit 220 uses the detection result of the peripheral speed sensor 531 to acquire the actual speed value. More specifically, the acquisition unit 220 acquires the peripheral speed of the wheel 101, that is, the vehicle speed in the roller processing as the actual speed value. The vehicle speed acquired as the actual speed value is also referred to as a target vehicle speed. The target vehicle speed is acquired as a constant vehicle speed, such as 40 km/h or 60 km/h. That is, in the roller processing, the vehicle 100 is at least accelerated to a vehicle speed corresponding to the target vehicle speed. Moreover, the acquisition unit 220 acquires a target displayed speed as the displayed speed value. The target displayed speed is a displayed speed corresponding in terms of time to the target vehicle speed, in the displayed speed in the roller processing. That is, the target displayed speed corresponds to the displayed speed at a timing at which the vehicle speed of the vehicle 100 matches the target vehicle speed in the roller processing.

In this embodiment, the acquisition unit 220 re-acquires the displayed speed value and the actual speed value after completion of calibration processing described later. The displayed speed value re-acquired after completion of the calibration processing in this manner is also referred to as another displayed speed value in particular. Furthermore, the actual speed value re-acquired after completion of the calibration processing is also referred to as another actual speed value in particular. That is, in this embodiment, the roller processing is re-executed after completion of the calibration processing, and the another displayed speed value and the another actual speed value are acquired.

The calibration unit 230 is capable of executing the calibration processing. The calibration processing is processing of calibrating the displayed speed to have a smaller speed difference. The speed difference indicates a difference between the displayed speed value and the actual speed value. The speed difference is indicated as an absolute value of the difference between the displayed speed value and the actual speed value. That is, "small speed difference" means that the absolute value of the difference between the displayed speed value and the actual speed value is small. In this embodiment, in the calibration processing, the calibration unit 230 generates a correction value for correcting the vehicle speed calculation parameter VP in accordance with the speed difference, and transmits the generated correction value to the vehicle 100. The vehicle control unit 115 uses the received correction value to correct the vehicle speed calculation parameter VP. As a result, the displayed speed is calibrated.

In this embodiment, the calibration unit 230 executes the calibration processing when a difference condition is satisfied, and does not execute the calibration processing when the difference condition is not satisfied. The difference condition is a condition that the speed difference is equal to or less than a first reference value determined in advance and is more than a second reference value determined in advance. The second reference value is a value smaller than the first reference value.

For example, the first reference value is determined as a value small enough to assure that the speed difference is not due to a vehicle speed abnormality of the vehicle 100. Examples of the vehicle speed abnormality as used herein include an abnormality of the wheel 101 and an abnormality of the vehicle speed sensor. When the speed difference is comparatively large, such a vehicle speed abnormality may be occurring in the vehicle 100. When the speed difference is larger than the first reference value, the vehicle speed abnormality may be occurring, and thus, for example, the vehicle speed abnormality is preferably repaired prior to the calibration processing or instead of the calibration processing.

For example, the second reference value is determined as a value small enough to suppress a decrease in convenience of the vehicle 100 due to the difference between the displayed speed and the actual speed. The second reference value may be zero. When the second reference value is zero, the vehicle 100 can have more improved convenience. When the second reference value is larger than zero, the speed difference is allowed within a range in which a decrease in convenience of the vehicle 100 due to the difference between the displayed speed and the actual speed is suppressed. Therefore, when the second reference value is larger than zero, the displayed speed can more efficiently be calibrated.

In this embodiment, the calibration unit 230 may execute re-calibration processing after completion of the calibration processing. The re-calibration processing is processing of calibrating the displayed speed to reduce a re-acquired difference. The re-acquired difference indicates a difference between the another displayed speed value and the another actual speed value. More specifically, the calibration unit 230 executes the re-calibration processing when the re-acquired difference is more than the second reference value.

The notification unit 250 uses the terminal device 450 as a notification device to notify an administrator of various types of information. The administrator as used herein means an administrator of the factory FC and the system 50, and includes a worker in the factory FC and a worker who operates and maintains the system 50. Examples of the terminal device 450 include a tablet terminal and a smartphone owned by the administrator. In other embodiments, as the notification device, for example, a display device that outputs visual information, a speaker that outputs audio information, or a printer may be used.

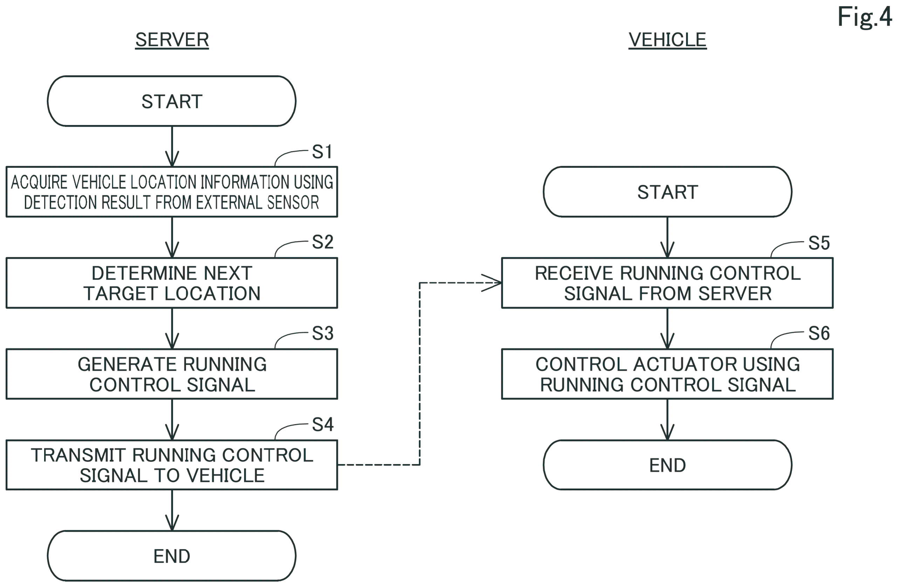

Fig. 4 is a flowchart illustrating a procedure of running control of the vehicle 100 according to the first embodiment. In the procedure in Fig. 4, the processor 201 of the server 200 executes the program PG2, thus functioning as the remote control unit 210. Moreover, the processor 111 of the vehicle 100 executes the program PG1, thus functioning as the vehicle control unit 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

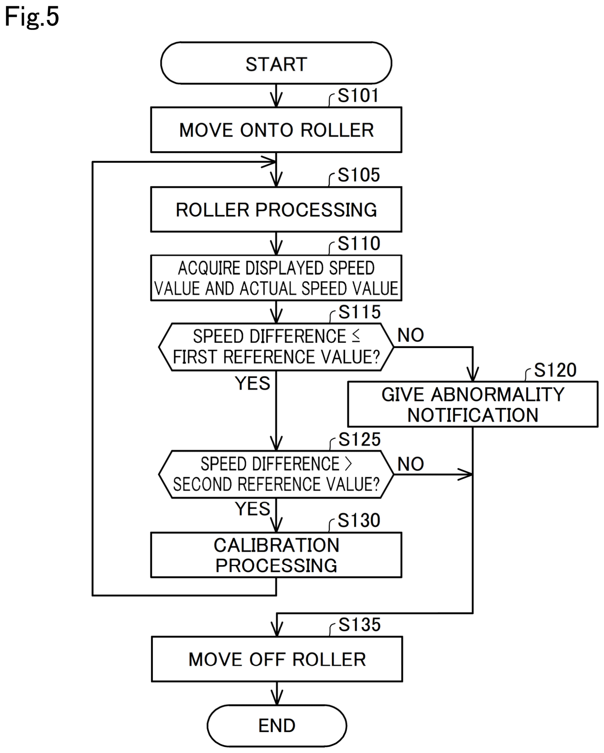

Fig. 5 is a flowchart illustrating a procedure of calibration control processing to implement a calibration method according to this embodiment.

In Step S101, the remote control unit 210 causes the vehicle 100 to move onto the roller 510 by the unmanned driving control and causes the vehicle 100 to get onto the roller 510. In Step S105, the remote control unit 210 executes the roller processing.

In Step S110, the acquisition unit 220 acquires the displayed speed value and the actual speed value. That is, in Step S110, the acquisition unit 220 acquires the target vehicle speed and the target displayed speed.

In Step S115, the calibration unit 230 determines whether the speed difference between the displayed speed value and the actual speed value acquired in Step S115 is equal to or less than the first reference value. If the speed difference is larger than the first reference value in Step S115, in Step S120, the notification unit 250 uses the notification device such as the terminal device 450 to notify the administrator of the system 50 of abnormality. In Step S120, for example, the notification unit 250 outputs information on the vehicle speed abnormality to the terminal device 450 as the notification device. In Step S135, the remote control unit 210 cause the vehicle 100 to move off the roller 510 by the unmanned driving control. Then, the processor 201 ends the calibration control processing.

If the speed difference is equal to or less than the first reference value in Step S115, in Step S125, the calibration unit 230 determines whether the speed difference is larger than the second reference value. If the speed difference is equal to or less than the second reference value in Step S125, processing in Step S135 is executed. The speed difference being equal to or less than the second reference value in Step S125 corresponds to a state in which the displayed speed is originally appropriate, or the displayed speed is appropriately calibrated by the calibration processing.

If the speed difference is larger than the second reference value in Step S125, in Step S130, the calibration unit 230 executes the calibration processing. Then, the processor 201 returns the processing to Step S105.

The displayed speed value acquired in the reperformed Step S110 corresponds to the another displayed speed value. The actual speed value acquired in the reperformed Step S110 corresponds to the another actual speed value. In the reperformed Steps S115 and S125, whether the re-acquired difference is equal to or less than the first reference value and whether the re-acquired difference is larger than the second reference value are determined, respectively. A case in which the re-acquired difference is equal to or less than the second reference value in the reperformed Step S125 means that the speed difference has appropriately decreased as a result of the calibration processing executed last time. Note that, in other embodiments, Step S115 may be omitted after the reperformed Step S110. This is because the speed difference is confirmed to be equal to or less than the first reference value in the first Step S115 and the re-acquired difference is acquired after execution of the calibration processing, and thus the re-acquired difference has comparatively low possibility of being larger than the first reference value.

The calibration processing executed in the reperformed Step S130 corresponds to the re-calibration processing. That is, the re-calibration processing in this embodiment is executed when the re-acquired difference is larger than the second reference value, and is not executed when the re-acquired difference is equal to or less than the second reference value. Further, in this embodiment, the calibration unit 230 repetitively executes the calibration processing until the speed difference becomes equal to or less than the second reference value.

According to the system 50 in this embodiment described above, the displayed speed is calibrated by the calibration processing to reduce the speed difference between the displayed speed value and the actual speed value. As a result, the difference between the displayed speed and the actual speed can be reduced, and the vehicle 100 can have improved convenience.

In this embodiment, the calibration processing is executed when the difference condition that the speed difference is equal to or less than the first reference value and larger than the second reference value is satisfied. On the other hand, the calibration processing is not executed when the difference condition is not satisfied. Accordingly, the displayed speed can be calibrated upon confirming that the speed difference is equal to or less than the first reference value, that is, there is a high possibility that the vehicle speed abnormality is not occurring. Thus, the calibrated displayed speed can have more improved reliability.

In this embodiment, the another displayed speed value and the another actual speed value are acquired after the calibration processing, and the re-calibration processing is executed when the re-acquired difference between the another displayed speed value and the another actual speed value is larger than the second reference value. Therefore, the difference between the displayed speed and the actual speed can more surely be reduced to a desired extent.

In this embodiment, the target vehicle speed in the roller processing is used as the actual speed value, and the target displayed speed corresponding in terms of time to the target vehicle speed is used as the displayed speed value. Therefore, the roller equipment 500 and the unmanned driving control can be utilized to efficiently execute the calibration processing without moving the vehicle 100 on the roller 510.

In this embodiment, the unmanned driving control can be utilized to automatically execute moving of the vehicle 100 onto the roller 510, the calibration processing on the roller 510, and moving of the vehicle 100 off the roller 510, and thereby the displayed speed can be more efficiently calibrated. In particular, in this embodiment, the calibration processing can repetitively be executed on the roller 510 until the speed difference becomes equal to or less than the second reference value, and the vehicle 100 can be caused to automatically move off the roller 510 when the speed difference becomes equal to or less than the second reference value. Therefore, the displayed speed can more efficiently and more appropriately be calibrated.

### B. Second Embodiment

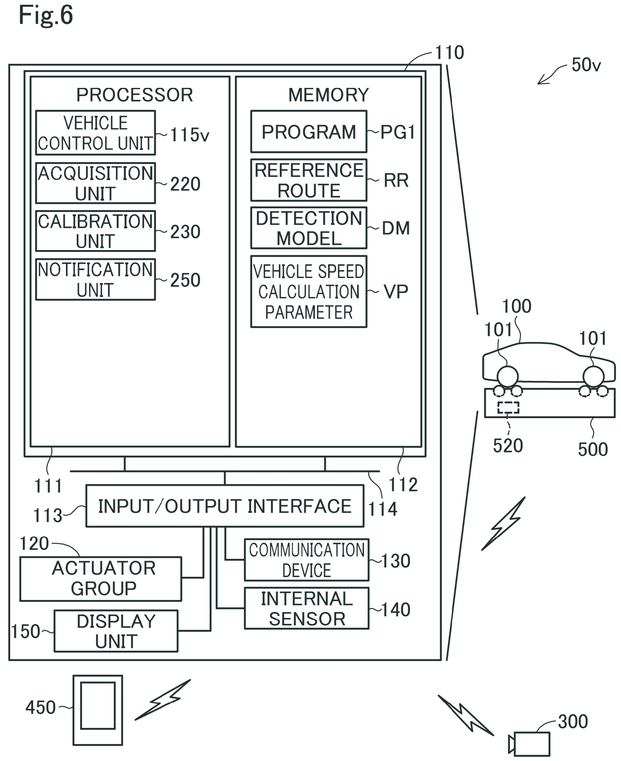

Fig. 6 is an explanatory diagram illustrating a schematic configuration of a system 50v according to a second embodiment. In this embodiment, the system 50v is different from that of the first embodiment in that the system 50v does not include the server 200. A device configuration of a vehicle in this embodiment is similar to that of the first embodiment, and thus the vehicle in this embodiment is referred to as the vehicle 100 for convenience. The vehicle 100 in this embodiment can run by the autonomous control of the vehicle 100. Other configurations are the same as those of the first embodiment unless otherwise described.

In this embodiment, the communication device 130 of the vehicle 100 can communicate with the external sensor 300, the terminal device 450, and the roller equipment 500. The processor 111 of the vehicle control device 110 executes the program PG1 stored in the memory 112, thus functioning as a vehicle control unit 115v, the acquisition unit 220, the calibration unit 230, and the notification unit 250. The vehicle control unit 115v generates a running control signal and outputs the generated running control signal to cause the actuator group 120 to operate, and thereby can cause the vehicle 100 to run by the autonomous control. In this embodiment, the memory 112 stores, in addition to the program PG1 and the vehicle speed calculation parameter VP, the detection model DM, and the reference route RR in advance. The vehicle control unit 115v in this embodiment corresponds to the "control unit" of the present disclosure.

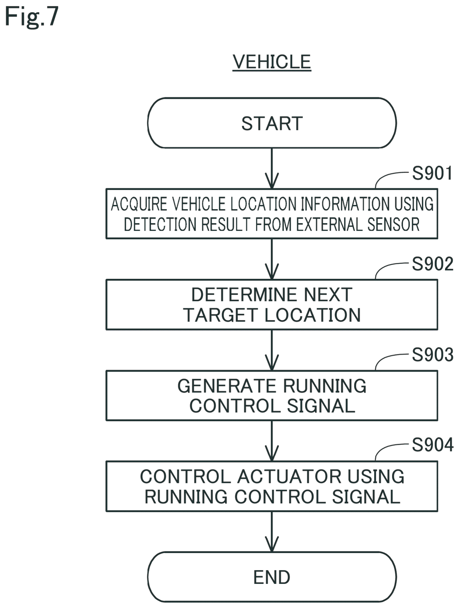

Fig. 7 is a flowchart illustrating a procedure of running control of the vehicle 100 according to a third embodiment. In the procedure in Fig. 7, the processor 111 of the vehicle 100 executes the program PG1, thus functioning as the vehicle control unit 115v.

In step S901, the processor 111 of the vehicle control device 110 acquires vehicle location information using detection result output from the camera as the external sensor 300. In step S902, the processor 111 determines a target location to which the vehicle 100 is to move next. In step S903, the processor 111 generates a running control signal for causing the vehicle 100 to run to the determined target location. In step S904, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator in a predetermined cycle. According to the system 50v in the present embodiment, it is possible to cause the vehicle 100 to run by autonomous control without controlling the vehicle 100 remotely using the server 200.

In this embodiment, the processor 111 of the vehicle 100 executes the calibration control processing similar to that in Fig. 5. For example, in Step S105 in Fig. 5, the autonomous control of the vehicle 100 is utilized to implement the roller processing.

Also with the system 50v according to the second embodiment described above, the difference between the displayed speed and the actual speed can be reduced, and the vehicle 100 can have improved convenience.

### C. Other Embodiments

(C1) In each embodiment described above, the calibration processing is executed when the difference condition is satisfied, but the present disclosure is not limited thereto. For example, the calibration processing may be executed regardless of whether the vehicle speed difference is equal to or less than the first reference value. Similarly, the calibration processing may be executed regardless of whether the vehicle speed difference is larger than the second reference value.

(C2) In each embodiment described above, the re-calibration processing is executed, but the re-calibration processing may not be executed.

(C3) In each embodiment described above, the calibration processing is executed while the vehicle 100 is positioned on the roller 510, but the present disclosure is not limited thereto. For example, the calibration processing may be executed after the vehicle 100 is moved off the roller 510 to the outside of the roller 510. Moreover, in this case, the displayed speed value and the actual speed value may be acquired after the vehicle 100 is moved off the roller 510 to the outside of the roller 510.

(C4) In each embodiment described above, the roller equipment 500 is utilized to acquire the displayed speed value and the actual speed value, but the present disclosure is not limited thereto. For example, the displayed speed value and the actual speed value may be acquired by causing the vehicle 100 to actually run. In this case, a target pulse number that is the number of target pulses may be acquired as the displayed speed value. The target pulses indicate vehicle speed pulses output from the vehicle speed sensor while the vehicle 100 runs a reference distance determined in advance. Moreover, a reference pulse number may be acquired as the actual speed value. The reference pulse number corresponds to the target pulse number in a case in which the vehicle 100 runs the reference distance in an ideal condition. The ideal condition includes that the vehicle 100 is in a proper state and that the vehicle 100 does not idle or slip. The proper state means a state in which a wheel outer diameter of the vehicle 100 and the number of pulses per rotation of the vehicle 100 fall within the respective prescribed values. In the proper state, the displayed speed and the actual speed match one another as long as idling and slipping of the wheel 101 are not considered. Moreover, in the case in which the vehicle 100 is caused to actually run, a speed of the vehicle 100 calculated by using the external sensor 300 may be used as the actual speed value. Similarly to that described above, for example, regarding the moving object other than the vehicle 100, the displayed speed value and the actual speed value may be acquired by causing the moving object to actually move.

(C5) In the system 50 in each embodiment described above, various functional units including the acquisition unit 220, the calibration unit 230, and the notification unit 250 may be provided to the vehicle 100. In this case, as described in the second embodiment, all of the acquisition unit 220, the calibration unit 230, and the notification unit 250 may be provided to the vehicle 100, or some of these functional units may be provided to the vehicle 100. In the system 50, some or all of these functional units may be provided to, for example, a device outside of the server 200 and the vehicle 100.

### D. Other Embodiments

(D1) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100.

(D2) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D3) In the above-described second embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D4) In the above-described second embodiment, the vehicle 100 acquires vehicle location information using detection result from the external sensor 300. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal. The functional configuration of the system 50v may be entirely provided at the vehicle 100. Specifically, the processes realized by the system 50v in the present disclosure may be realized by the vehicle 100 alone.

(D5) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(D6) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle control device 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D7) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D8) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The present disclosure is not limited to the embodiments described above, but can be implemented in a variety of configurations without departing from the spirit of the present disclosure. For example, in order to solve some or all of the aforementioned problems or to achieve some or all of the aforementioned effects, the technical features of the embodiments corresponding to the technical features in each aspect described in the summary can appropriately be substituted or combined. Moreover, unless the technical feature is explained herein as being essential, it can be eliminated as appropriate.

## Claims

1. A calibration system (50;50v) comprising:
an acquisition unit (210) configured to acquire:
a displayed speed value related to a displayed speed, the displayed speed indicating a moving speed of a moving object and being displayed on a display unit (150) provided to the moving object; and
an actual speed value related to an actual speed of the moving object; and
a calibration unit (230) configured to execute calibration processing of calibrating the displayed speed to reduce a difference between the displayed speed value and the actual speed value.

2. The calibration system (50;50v) according to claim 1, wherein the calibration unit (230) is configured to:
execute the calibration processing when a speed difference between the displayed speed value and the actual speed value is equal to or less than a first reference value determined in advance and larger than a second reference value, the second reference value being smaller than the first reference value; and
not to execute the calibration processing when the speed difference is larger than the first reference value.

3. The calibration system (50;50v) according to claim 2, wherein the acquisition unit (210) is configured to re-acquire the displayed speed value and the actual speed value after completion of the calibration processing, and
when a re-acquired difference is larger than the second reference value, the calibration unit (230) is configured to execute re-calibration processing of calibrating the displayed speed to reduce the re-acquired difference, the re-acquired difference indicating the speed difference between the re-acquired displayed speed value and the re-acquired actual speed value.

4. The calibration system (50;50v) according to any one of claims 1 to 3, further comprising:
a vehicle (100) as the moving object;
roller (510) equipment (500) comprising a roller (510) that is rotatable while supporting a wheel (101) of the vehicle (100), and a sensor configured to detect a peripheral speed of the roller (510); and
a control unit configured to execute roller (510) processing of drivingly rotating the wheel (101) supported by the roller (510) by unmanned driving control of the vehicle (100) to cause the roller (510) to rotate in a driven manner, wherein
the actual speed value is the peripheral speed in the roller (510) processing, and
the displayed speed value is the displayed speed corresponding in terms of time to the peripheral speed in the roller (510) processing.

5. The calibration system (50;50v) according to claim 4, wherein the control unit is configured to:
cause the vehicle (100) to move onto the roller (510) by the unmanned driving control before execution of the calibration processing; and
cause the vehicle (100) to move off the roller (510) by the unmanned driving control after completion of the calibration processing.
